# EUROPÄISCHE PATENTSCHRIFT

(11) **EP 1 984 635 B1**
(45) Veröffentlichungstag und Bekanntmachung des Hinweises auf die Patenterteilung: **26.11.2014**
(21) Anmeldenummer: 07711502.0
(22) Anmeldetag: 12.02.2007
(51) Int. Cl.: F16B 19/12, B21J 15/04, B21J 15/12, F16B 19/08, F16B 19/10

(54) **SCHUSSNIET**
GUN RIVET
RIVET À FRAPPER

(30) Priorität: 12.02.2006 DE 102006007706; 12.02.2006 DE 102006007708
(43) Veröffentlichungstag der Anmeldung: 29.10.2008
(73) Patentinhaber: Adolf Würth GmbH & Co. KG, 74653 Künzelsau (DE); Würth International AG, 7000 Chur (CH)
(72) Erfinder: FRANK, Uwe, 74629 Windischenbach (DE); STROBEL, Marcel, 74626 Bretzfeld (DE)
(74) Vertreter: Patentanwälte Ruff, Wilhelm, Beier, Dauster & Partner
(86) Internationale Anmeldenummer: PCT/EP2007/001153
(87) Internationale Veröffentlichungsnummer: WO 2007/090682

(56) Entgegenhaltungen:
- EP-A1- 1 396 646
- WO-A-01/73303
- WO-A-01/76785
- FR-A- 1 353 167
- FR-A- 2 246 199
- US-A1- 2006 175 381

## Beschreibung

Die Erfindung betrifft einen als Schussniet ausgebildeten Blindniet, eine Vorrichtung und ein Verfahren zu seinem Setzen.

Blindniete sind seit langem bekannt. Sie dienen dazu, zwei Elemente mit Hilfe eines Nietvorgangs miteinander zu verbinden, wobei der Zugang zu der Rückseite nicht erforderlich ist. Aus diesem Grunde eignen sich Blindniete insbesondere dort, wo der Zugang zu der Rückseite der beiden miteinander zu verbindenden Elemente nicht möglich ist. Bei den üblichen Blindnieten ist es erforderlich, die zu verbindenden Bauteile mit Löchern zu versehen, durch die der Nietkörper hindurchgesteckt wird. Von der Vorderseite her wird dann an einem Nietdorn gezogen, der den Niet auf der Rückseite zur Bildung eines Nietkopfs verformt.

Es ist schon bekannt, die Spitze des Dorns, die auf der Vorderseite des Niets herausragt, als selbstbohrende Spitze auszubilden, so dass mit einem entsprechenden Gerät der Bohrvorgang in einem Vorgang mit dem Nietvorgang durchgeführt werden kann.

Seit einiger Zeit ist es auch bekannt, einen Blindniet als Schussniet auszubilden, so dass er mit einem Schussgerät in die zu verbindenden Elemente ohne Vorbohren eines Lochs eingeschossen wird. Bei diesen bekannten Schussnieten muss wie bei den sonstigen Blindnieten an einem durch den Nietkörper hindurchgehenden Dorn nach dem Setzen gezogen werden, um den eigentlichen Nietvorgang zu bewirken. Dieser relativ lange Dorn, an dem ein Werkzeug zum Ziehen angreift, wird anschließend weggeworfen oder fällt unkontrolliert in die Umgebung der Stelle, wo die Nietung durchgeführt wurde.

Ein solcher Schussniet, welcher den Oberbegriff des Anspruch 1 darstellt, ist durch die WO 01/73303 A2 offenbart.

Außerdem sind Hammerschlagniete bekannt, bei denen in einem Nietkörper ein Dorn mit einer Spitze in eine Bohrung eingesetzt ist, der aus der Stirnseite des Kragens mit seinem stumpfen Ende herausragt. Solche Niete werden mit einem Hammerschlag eingetrieben. Dabei schlägt der Hammer auf das herausragende Ende des Dorns auf. Dieser Hammerschlag ist nicht in der Lage, eine exakte Aufteilung der Kräfte in zunächst eine reine Vortriebskraft und erst anschließend eine Aufweitkraft zu bewirken (US 3691924).

Der Erfindung liegt die Aufgabe zu Grunde, die Möglichkeit des Blindnietens so zu verbessern, dass nach der durchgeführten Nietung kein Abfall entsteht, der getrennt entsorgt werden müsste.

Zur Lösung dieser Aufgabe schlägt die Erfindung einen Schussniet mit den im Anspruch 1 genannten Merkmalen vor. Weiterbildungen der Erfindung sind Gegenstand der abhängigen Patentansprüche.

Der von Erfindung vorgeschlagene Schussniet ist ähnlich aufgebaut wie ein bekannter Schussniet mit dem Unterschied, dass er keinen Dorn aufweist, an dem ein Werkzeug ziehen kann. Statt dessen gibt es in dem Nietkörper, beispielsweise an dem dem Kragen abgewandten Ende der Niethülse eine Ausbildung, die eine derartige Verformung möglich macht. Diese Ausbildung kann durch Sollknickstellen, Schlitze in Längsrichtung oder dergleichen erreicht werden. Das Werkzeug, das zum Setzen des Schussniets verwendet wird, greift dann direkt an diesem Teil des Nietkörpers an.

Beispielsweise kann in Weiterbildung der Erfindung die zentrale Angriffsstelle an dem Ende eines Lochs in dem Nietkörper gebildet sein. Um die Verformung auf der dem Kragen des Nietkörpers gegenüberliegende Seite beispielsweise zweier miteinander zu verbindender Bleche zu beschränken, ist es sinnvoll, das Loch in dem Nietkörper in Form einer Bohrung so tief zu gestalten, dass es etwa im Bereich zwischen der Niethülse und der Nietspitze endet.

In Weiterbildung in der Erfindung kann vorgesehen sein, dass die Angriffsstelle an einer Verengung eines Lochs in dem Nietkörper gebildet ist. Eine solche Verengung kann eine vergrößerte Angriffsfläche für das Zugwerkzeug bilden.

Insbesondere kann vorgesehen sein, dass die zentrale Angriffsstelle zur zugfesten Verbindung mit einem Zugbolzen ausgebildet ist. Dies kann beispielsweise so geschehen, dass die Angriffsstelle eine quer zur Längsachse verlaufende Fläche bildet, an der ein Zugbolzen angeschweißt werden kann, entweder durch eine Widerstandsverschweißung oder auch durch eine Kaltverschweißung.

Die Nietspitze, die dazu dient, das Loch in den miteinander zu verbindenden Blechen herzustellen, kann insbesondere ein einstückiger Teil des Nietkörpers sein.

Es ist aber ebenfalls möglich und liegt im Rahmen der Erfindung, dass die Nietspitze ein getrenntes mit dem Nietkörper verbundenes Bauteil ist. Da die Nietspitze beim Herstellen des Nietkopfs gegen den Nietkörper beaufschlagt wird, brauchen je nach Art der Anbringung des Zugbolzens unter Umständen an die Verbindung der Nietspitze mit dem Nietkörper keine erhöhten Anforderungen gestellt zu werden.

Wenn die Nietspitze ein getrenntes Bauteil ist, kann sie beispielsweise an ihrer dem Nietkörper zugewandten Rückseite eine Ringfläche zur Anlage an dem Nietkörper aufweisen, innerhalb der an der Nietspitze ein zentraler Vorsprung ausgebildet ist, der in das Loch des Nietkörpers eingreift und dort beispielsweise kraftschlüssig oder reibschlüssig festliegt.

Es kann inbesondere vorgesehen sein, dass die Nietspitze aus einem anderen Material oder aus einem anders vorbehandelten Material besteht als der Nietkörper.

Je nach Art der Befestigung des Zugbolzens an dem Schussniet kann es von Vorteil sein; wenn der Hülsenabschnitt des Nietkörpers eine von der Kreisform abweichende Außenkontur seines Querschnitts aufweist. Ebenfalls möglich ist es, wenn die an sich ebene Unterseite des Kragens des Nietkörpers Zacken oder sonstige scharfkantige Vorsprünge aufweist, die auf diese Weise eine Verdrehung des Nietkörpers gegenüber den Blechen, die er verbindet, verhindern.

Die Erfindung schlägt ebenfalls ein Verfahren zum Setzen von Blindnieten vor. Bei diesem Verfahren wird ein mit einer Nietspitze versehener Schussniet in ein Element bis zur Anlage einer Unterseite seines Kragens an der Oberseite des Elements schlagartig eingesetzt, beispielsweise eingeschossen. Gleichzeitig oder anschließend wird in eine Vertiefung des Nietkörpers, die die Form einer Bohrung aufweist, ein Zugbolzen eingeführt, bis er den Nietkörper insbesondere im Endbereich der Vertiefung berührt. Dort wird der Zugbolzen mit dem Nietkörper verbunden. Anschließend wird der Zugbolzen aus der Vertiefung herausgezogen, was dazu führt, dass sich der vordere Teil des Nietkörpers verformt, wobei er seinen Durchmesser vergrößert. Ragt der vordere Bereich auf der gegenüberliegenden Seite des Elements heraus, wird der zur Bildung eines Nietkopfs verformt. Sobald die Verformung erreicht bzw. der der Nietkopf gebildet ist, wird der Zugbolzen von dem Nietkörper gelöst. Der Zugbolzen kann beim nächsten Setzvorgang mit dem nächsten Schussniet wieder verwendet werden.

Der Zugbolzen ist Teil eines Werkzeugs, das zum Setzen von Schussnieten verwendet werden kann.

Die Verbindung zwischen dem Zugbolzen und dem Schussniet kann beispielsweise durch eine Kaltverschweißung hergestellt werden. Zu diesem Zweck kann der Zugbolzen während des Kontakts mit einer Angriffsstelle des Nietkörpers in Rotation versetzt werden, was zu der Verschweißung führen kann.

Eine weitere Verbindungsmöglichkeit besteht darin, dass eine Widerstandsverschweißung oder eine Kondensatorentladungsverschweißung zwischen dem Nietkörper und dem Zugbolzen durchgeführt wird. Hierzu kann eine Stromquelle in einem Setzwerkzeug angeordnet werden. Sinnvoll ist es in diesem Fall, dass der Zugbolzen gegenüber dem Schussniet im Bereich seiner Mantelfläche isoliert wird und nur seine Stirnfläche zugänglich ist.

Eine weitere Möglichkeit zur Herstellung der Verbindung besteht darin, dass der Zugbolzen im Bereich seines vorderen Endes eine selbstbohrende Spitze aufweist und sich in das innere Ende des Lochs im Nietkörper einschraubt. Zu diesem Zweck kann der Zugbolzen in eine Drehbewegung versetzt werden, die nach dem Herausziehen in umgekehrter Richtung orientiert wird, um die selbstbohrende Spitze wieder aus dem Nietkörper herauszuschrauben.

Sinnvoll ist es, wenn die Zugbewegung des Zugbolzens sich gegenüber dem Kragen des Nietkörpers abstützt. Damit soll erreicht werden, dass die Zugkraft nicht auf die Verbindung zwischen dem Nietkörper und dem Blech einwirkt. Erreicht werden kann dies beispielsweise dadurch, dass die Zugkraft in einem Werkzeug zwischen einem Abstützelement und dem Zugbolzen erzeugt wird.

Die Erfindung schlägt ebenfalls eine Vorrichtung zum Setzen von Schussnieten vor, die eine Halterung zum Halten eines Schussniets und einen mindestens in seinem vorderen Bereich rohrartigen Vorschubkörper aufweist, der von einem Antrieb schlagartig vorgeschoben werden kann. Dieser schlagartige Vorschub dient dazu, den Schussniet zunächst in die beiden Bleche einzuschließen. Die Vorrichtung enthält weiterhin einen Zugbolzen, der von einem Antrieb bis zur Berührung mit einer Gegenfläche in einer Vertiefung des Schussniets vorgeschoben werden kann. Dieser Vorschub braucht nicht schlagartig zu sein. Weiterhin ist eine Verbindungseinrichtung vorgesehen, um den Zugbolzen mit seiner vorderen Stirnfläche mit dem Ende der Vertiefung in dem Nietkörper zu verbinden. Der Antrieb für den Zugbolzen ist so ausgebildet, dass er den Zugbolzen nach Herstellung der Verbindung mit großer Kraft ziehen kann, wobei sich die Kraft an dem Vorschubkörper abstützt, der an der Vorderseite des Kragens anliegt.

Die Vorrichtung enthält weiterhin eine Einrichtung, um den Zugbolzen nach dem herausziehen von dem Nietkörper zu lösen. Dies kann beispielsweise durch entsprechende Gestaltung der Größe der vorderen Stirnfläche des Zugbolzens geschehen. Wenn diese Stirnfläche ausreichend klein ist, kann die Verbindung zwar ausreichend sein, die Verformung des Schussniets zu bewirken, aber nicht ausreichend, um einem weiteren Anziehen zu widerstehen. Dann reißt die Verbindung einfach ab.

Eine weitere Möglichkeit zur Trennung der Verbindung kann darin bestehen, dass der Zugbolzen verdreht wird. Dies kann zu einem Abscheren der Verbindung führen.

Als Verbindungseinrichtung kann eine Kaltverschweißung, eine Widerstandsverschweißung, oder auch ein Einschrauben mit Hilfe einer selbstbohrenden Spitze vorgesehen sein.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Figur 1: einen Längsschnitt durch einen Schussniet nach der Erfindung;
- Figur 2: die schematische Darstellung bei dem Beginn des Setzvorgangs;
- Figur 3: den Zustand nach dem Setzen des Nietkörpers vor der Bildung des Nietkopfs;
- Figur 4: das Einführen des Zugbolzens;
- Figur 5: den Zustand nach dem Bilden des Nietkopfs durch einen Zugvorgang;
- Figur 6: eine Seitenansicht des Ergebnisses des Setzvorgangs;
- Figur 7: eine der Figur 4 entsprechende Darstellung bei einer geänderten Ausführungsform;
- Figur 8: schematisch eine Vorrichtung zum Durchführen des Setzvorgangs mit einem Schussniet nach der Erfindung.
- Figur 9: einen Axialschnitt durch einen Schussniet mit einem Außengewinde am Kragen;
- Figur 10: einen Axialschnitt durch einen Schussniet mit einem Innengewinde in der Innenbohrung;
- Figur 11: eine Ansicht eines Schussniets von der Seite der Spitze her.

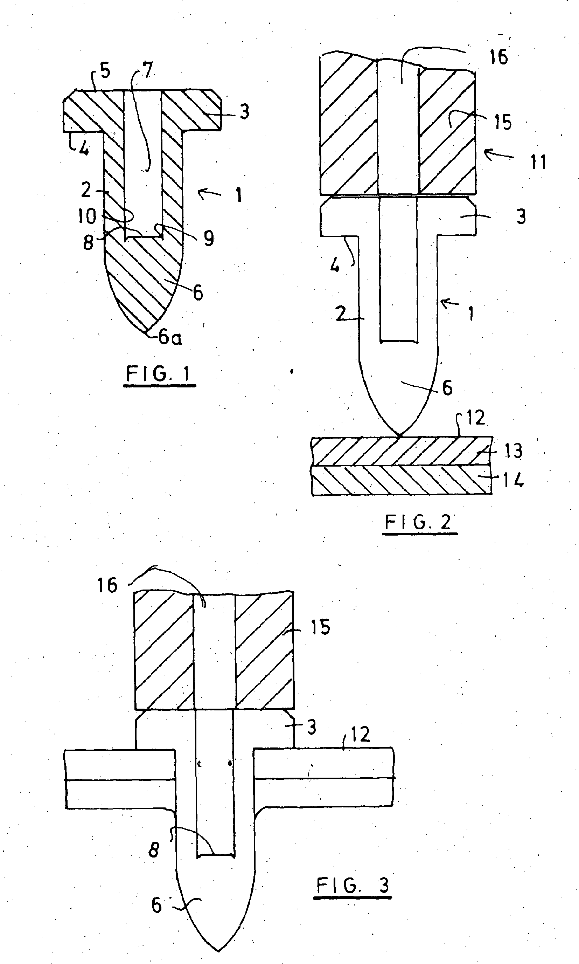

Figur 1 zeigt einen Längsschnitt durch einen Schussniet nach der Erfindung. Der Schussniet enthält einen Nietkörper 1, der in seinem mittleren Bereich als Niethülse 2 ausgebildet ist. An dem einen Ende ist an dem Nietkörper 1 ein Kragen 3 ausgebildet, der an seiner Unterseite 4 eine ebene Begrenzungsfläche aufweist. Die Unterseite ist diejenige Seite, die in Richtung auf die Nietspitze 6 gerichtet ist. Auf der der ebenen Unterseite 4 gegenüberliegenden Oberseite 5, die ebenfalls eben oder angenähert eben ausgebildet ist, ist eine Angriffsfläche für ein Setzwerkzeug ausgebildet.

An dem dem Kragen 3 abgewandten Ende ist die Nietspitze 6 ausgebildet, in der sich der Querschnitt des Nietkörpers kontinuierlich bis zu einer echten Spitze 6 a verringert. In den Nietkörper 1 ist eine Vertiefung 7 ausgebildet, wie die die Form einer Bohrung aufweist, das heißt eine zylindrische Querschnittsform. Die Vertiefung 7 endet in einem Boden 8, der durch eine umlaufende Kerbe 9 von der Wand 10 der Vertiefung 7 getrennt ist.

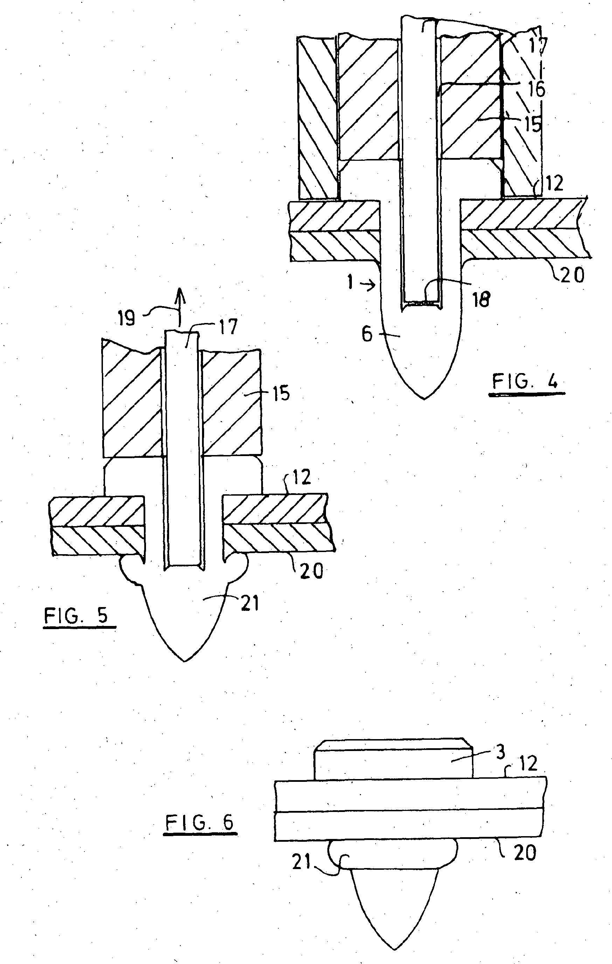

Der Setzvorgang dieses Schussniets läuft so ab, dass der Schussniet in einer Halterung eines Werkzeugs angeordnet wird. Die Zuordnung zwischen einem Teil des Setzwerkzeugs 11 und dem Nietkörper 1 ist in Figur 2 er dargestellt. Der Schussniet wird so positioniert, dass die Spitze 6 a der Nietspitze 6 auf der Oberfläche 12 zweier übereinander gelegter Bleche 13, 14 zu liegen kommt. Diese beiden Bleche 13, 14 sollen durch den Schussniet miteinander verbunden werden. Auf die der Niethülse 2 abgewandte Oberseite des Kragens 3 wird ein Teil des Setzwerkzeugs 11 aufgesetzt. Es handelt sich dabei um einen Vorschubkörper 15, der in diesem Bereich rohrförmig ausgebildet ist, also in der Mitte koaxial eine Bohrung 16 enthält. Dieser Vorschubkörper 15 wird mit Hilfe eines schlagartig arbeitenden Antriebs gegen den Kopf des Nietkörpers 1 angeschlagen und dieser durch diesen Schlag mit seiner Spitze 6 a und 6 durch die beiden Bleche 13,14 hindurch getrieben. Im Ergebnis liegt die Unterseite 4 des Kragens 3 auf der Oberseite 12 der beiden Bleche 13, 14 an. Dabei verformt sich das untere Blech 14 im Randbereich etwas. Das Ergebnis dieses ersten Setzvorgangs, der nur den Nietkörper durch die Bleche hindurch treibt, ist in Figur 3 dargestellt. Eine den Vorschubkörper umgebende Aufsetzhülse, siehe Figur 4, kommt auf der Oberfläche des Blechs zum aufliegen. Überschüssige Energie wird somit von dem Vorschubkörper in die Aufsetzhülse abgeleitet, damit der Kragen 3 des Schussniets nur wenig Energie aufnehmen muss, wenn er bündig gesetzt wird.

Nun wird in einem weiteren Arbeitsschritt ein Zugbolzen 17 durch die Bohrung 16 des Vörschubkörpers 15 hindurch bewegt, der einen etwas geringeren Außendurchmesser als die Bohrung 16 aufweist. Der Zugbolzen wird so weit vorwärts bewegt, bis er auf dem Boden 8 der Vertiefung 7 des Nietkörpers 1 zur Anlage gelangt. Dort erfolgt eine Verbindung 18 beispielsweise durch ein Widerstandsverschweißung. Zu diesem Zweck ist der Zugbolzen 17 längs seiner Mantelfläche isoliert, nur seine Stirnfläche ist frei. Ein Pol der Spannungsquelle wird, beispielsweise über den Vorschubkörper 15, an den metallischen Nietkörper 1 gelegt, und der andere Pol der Spannungsquelle an den Zugbolzen 17. Sobald der Zugbolzen 17 den Boden 8 der Vertiefung 7 berührt, entsteht durch die Verschweißung die Verbindung 18.

Anschließend wird der Zugbolzen gegenüber dem Vorschubkörper 15 angezogen, wie dies durch den Pfeil 19 in Figur 5 dargestellt ist. Durch diesen Zugvorgang wird die Nietspitze 6 gegen die beiden Bleche 13, 14 gezogen, wobei die Niethülse 2 sich im Bereich zwischen der Rückseite 20 der beiden Bleche und dem Boden 8 verformt, wie dies bei einem üblichen Blindniet der Fall sein würde. Als Ergebnis ist auf der Rückseite der beiden Bleche ein Nietkopf 21 gebildet, wie dies unten in Figur 5 dargestellt ist.

Nun muss noch der Zugbolzen 19 von dem Boden 8 der Vertiefung 7 gelöst werden. Dies kann beispielsweise dadurch geschehen, dass eine weitere Zugkraft ausgeübt wird, die ausreicht, die Verbindung 18 zu zerstören. Diese Kraft muss natürlich geringer sein als die Kraft, die den Nietkopf 21 zerstören würde. Eine weitere Möglichkeit zur Trennung der Verbindung 18 besteht darin, dass der Zugbolzen 17 jetzt verdreht wird. Dadurch entsteht eine Schwerkraft, die die Verbindung 18 gelöst. In diesem Fall ist es sinnvoll, dass der Nietkörper 1 im Bereich der Niethülse 2 einen unrunden Querschnitt aufweist, oder aber dass die Unterseite 4 des Kragens 3 Vorsprünge, Zacken oder dergleichen aufweist, um ein Mitdrehen des Nietkörpers zu verhindern.

Als Ergebnis ist eine Vernietung der beiden Bleche 13, 14 entstanden, bei der auf der einen Seite 12 der beiden Bleche der Kragen 3 und auf der gegenüberliegenden Seite 20 der Nietkopf 21 vorhanden ist. Von der Oberseite des Kragens 3 aus gesehen ist dort ein zentrales Loch vorhanden.

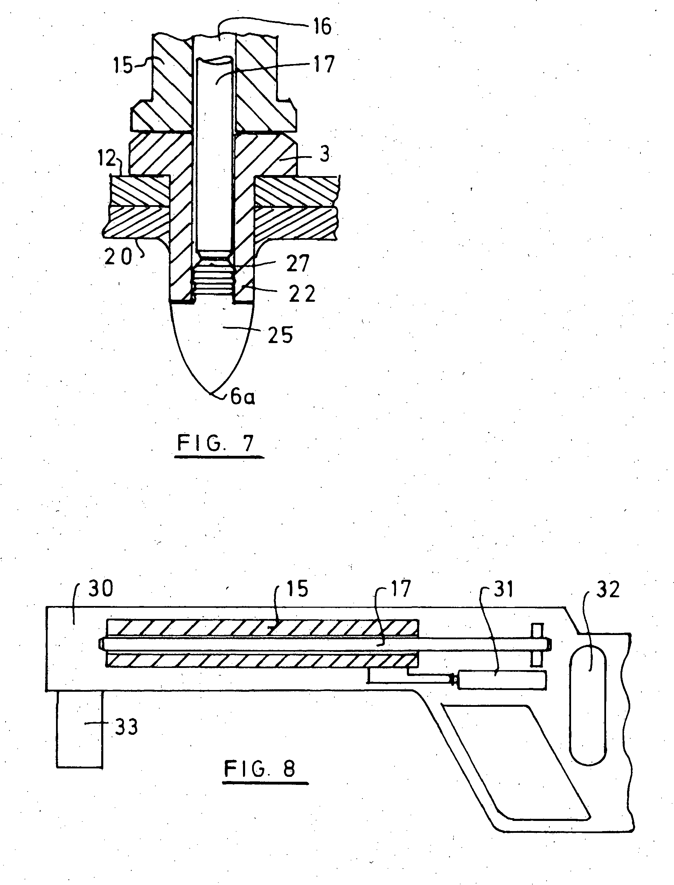

Bei der insoweit beschriebenen Ausführungsform ist der Nietkörper 1 ein einstückiges Bauteil, bei dem die Nietspitze 6 einer Fortsetzung der Niethülse 2 ist. Figur 7 zeigt nun eine weitere Möglichkeit, wie der Nietkörper aufgebaut sein kann. Hier ist die Niethülse 22 eine echte Hülse, die eine durchgehende Innenöffnung aufweist. An dem dem Kragen 3 abgewandten Ende der Niethülse 22 ist in diese eine Nietspitze 25 eingesetzt, die als getrenntes Bauteil hergestellt ist. Die Nietspitze 25 weist eine ihrer Spitze 6a abgewandte ringförmige ebene Begrenzungsfläche 26 auf, die dem ringförmigen Ende der Niethülse 22 entspricht. In der Mitte ist ein Ansatz 27 angeformt, dessen Außendurchmesser etwas größer ist als der Innendurchmesser der Niethülse 22. Auf diese Weise kann die Nietspitze 25 in die Niethülse 22 eingepasst werden. Damit ist eine Festlegung erreicht. Die Verbindung zwischen dem Zugbolzen 17 und dem Ansatz 27 der Nietspitze 25 geschieht auf die gleiche Weise wie bei der Ausführungsform nach Figur 1 bis 6. Der Ansatz 27 kann auch weiter in die Niethülse hinein reichen, ggf. bis zur Angriffsfläche 5 des Schussniets. Sinnvoll ist es hier, dass der Ansatz in der Niethülse die Wand nicht oder nur mit geringer Kraft berührt, da er gegenüber der Niethülse gezogen werden soll.

Figur 8 zeigt eine Vorrichtung zum Setzen eines Schussniets nach dem hier beschriebenen Verfahren. Die Vorrichtung enthält ein Gehäuse 30, das ähnlich aufgebaut ist und aussieht wie ein übliches Setzgerät für Bolzen. In dem Gehäuse ist in Längsrichtung verschiebbar der Vorschubkörper 15 gelagert, der bereits in Figur 4 hergestellt und erwähnt wurde. Der Vorschubkörper 15 enthält einen Antrieb 31, der so aufgebaut ist, dass der Vorschubkörper 15 gegenüber dem Gehäuse 30 in einer schlagartigen Bewegung nach vorne bewegt werden kann, um den Schussniet durch die beiden Bleche hindurch zu treiben. Dieser Antrieb 31 kann beispielsweise explosionsbetrieben sein, zu welchem Zweck eine Gaspatrone 32 in dem Gehäuse 30 angeordnet sein kann. Koaxial in dem Vorschubkörper 15 ist in einer nicht dargestellten Lagerung der Zugbolzen 17 ebenfalls in Längsrichtung verschiebbar angeordnet. Der Zugbolzen 17 braucht nicht in einer schlagartigen Vorwärtsbewegung angetrieben zu werden, da er die Angriffsstelle am Boden der Vertiefung 7 nur berühren muss. Er muss aber einen Antrieb haben, der den Zugbolzen 17 mit großer Kraft zurückzieht, da diese Kraft ausreichen muss, die Verformung des durch die beiden Bleche hindurch gelangten Bereichs des Nietkörpers zu verformen. Dieser Antrieb kann beispielsweise durch eine Schraubbewegung erreicht werden.

Seitlich im vorderen Bereich des Gehäuses 30 ist ein Magazin 31 angeordnet, in dem eine Vielzahl von Schussnieten untergebracht sind, die von einer Feder in eine Halterung unmittelbar vor dem Arbeitsende des Vorschubkörpers 15 bewegt werden.

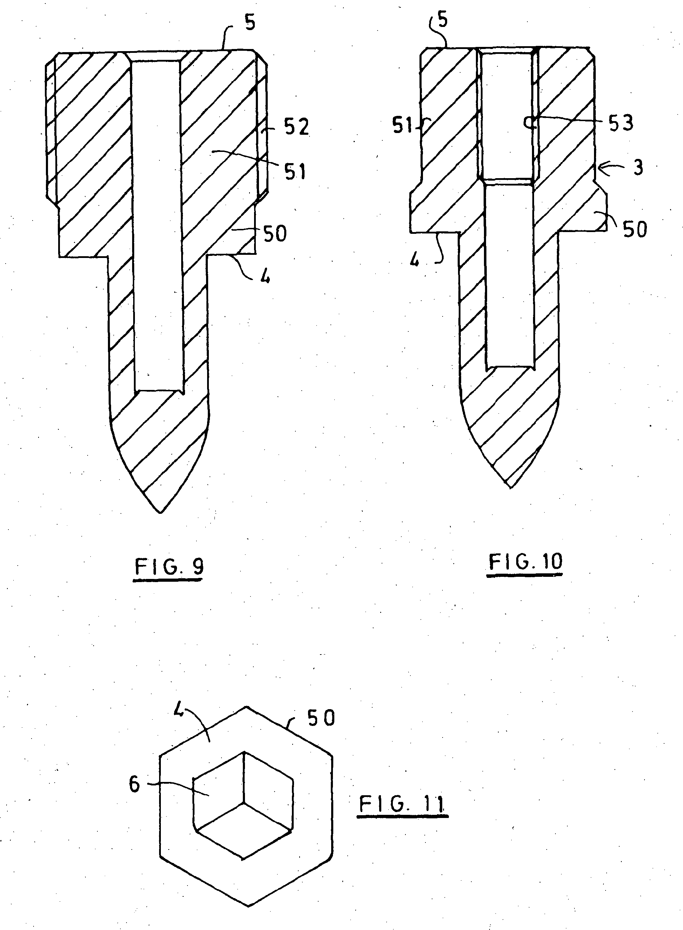

Figur 9 zeigt einen mit Axialschnitt durch eine weitere Ausführungsform, bei der der Kragen auf seiner der ebenen Unterseite 4 abgewandten Seite einen Ansatz 51 aufweist, der den Kragen 3 insgesamt deutlich dicker macht. An diesem Abschnitt 51 ist ein Außengewinde 52 ausgebildet. Die Angriffsfläche für das Setzwerkzeug hat daher einen größeren Abstand von der ebenen Unterseite 4. Die Außenkontur des Kragenabschnitts 50 ohne Außengewinde kann beispielsweise sechskantig sein, so dass man hier mit einem Schraubenschlüssel angreifen kann. Der Außendurchmesser des mit dem Gewinde 52 versehenen Abschnitts 51 ist größer als der Außendurchmesser des direkt an die Unterseite 4 anschließenden Abschnitts 50 des Kragens 3.

Zur Verhinderung des Mitdrehens können an dieser Unterseite 4 Vorsprünge, Verrippungen oder dergleichen angeordnet sein, die sich beim Setzen des Schussniets in das Material eingraben.

Figur 10 zeigt eine Ausführungsform, bei der der Kragen 3 insgesamt ebenfalls deutlich dicker ist als bei den Ausführungsformen nach den Figuren 1 bis 7. Hier ist wieder ein direkt an die Unterseite 4 anschließender Abschnitt 50 gebildet, wo wiederum eine Schlüsselfläche ausgebildet sein kann. Der sich daran anschließende Abschnitt 51 ist außen glattflächig ausgebildet, also ohne Gewinde. Dafür ist der äußere Bereich der Innenbohrung 7, das heißt der sich an die Angriffsfläche 5 anschließende Bereich, mit einem Innengewinde 53 versehen. Hier kann nach dem Setzen des Schussniets ein Element eingeschraubt werden, ebenso wie bei dem Außengewinde 52 der Ausführungsform nach Figur 9.

Der Schussniet nach der Erfindung, insbesondere bei der Ausführungsform nach Figur 9 und 10, kann nicht nur dazu dienen, zwei Teile, beispielsweise Bleche, miteinander zu verbinden. Gerade bei der Ausführungsform nach Figur 9 und 10 ist es möglich, den Schussniet nur dazu zu verwenden, sich selbst zu befestigen, um anschließend ein weiteres Element mit Hilfe der vorgesehenen Einrichtungen an dem Schussniet zu befestigen. Hierzu kann sowohl das Außengewinde 52 als auch das Innengewinde 53 dienen. Auch weitere Möglichkeiten sind denkbar, beispielsweise durch den Gewindeansatz verlaufende Querbohrungen, Bajonettanschlüsse oder dergleichen.

Wenn ein Schussniet nicht nur dazu dienen kann, zwei Bleche zu verbinden, sondern auch dazu, nur sich selbst zu befestigen, so ist es auch nicht erforderlich, dass die Aufweitung des vorderen Bereichs auf der Rückseite eines Elements geschieht, an dem der Schussniet befestigt werden soll. Es ist auch möglich und liegt im Rahmen der Erfindung, dass die Aufweitung innerhalb des Lochs bzw. der Bohrung in dem Element selbst erfolgen kann, wenn das Element, an dem befestigt wird, eine entsprechend große Dicke aufweist. Eine Verformung nach außen kann also auch innerhalb eines Lochs, auch eine Sacklochs, erfolgen.

Während Niete, auch Schussniete, üblicherweise einen kreisrunden Querschnitt aufweisen, kann erfindungsgemäß auch vorgesehen sein, dass der Schussniet mindestens im Bereich seiner Spitze oder auch über den gesamten Nietkörper einen von einem Kreis abweichenden Querschnitt aufweist. So zeigt beispielsweise die Figur 11 eine Ansicht eines Schussniets von der Seite der Spitze her, bei dem sowohl die Nietspitze 6 als auch der Kragen 50 sechseckig ausgebildet sind. Dadurch ist der vordere Bereich der Nietspitze mit drei Kanten versehen, die das Eindringen des Schussniets in das Blech erleichtern können. Wenn die gesamte Nietspitze einen sechseckigen Querschnitt aufweist, kann dies auch dazu dienen, eine Drehsicherung dieses Schussniets zu bewirken.

## Patentansprüche

1. Schussniet, mit
1.1 einem Nietkörper (1),
1.2 einem an diesem ausgebildeten Kragen (3), der
1.3 eine mindestens angenähert ebene Unterseite (4) und
1.4 auf der der Unterseite (4) gegenüberliegenden Vorderseite (5) eine Angriffsfläche für ein Werkzeug (11) aufweist,
1.5 einer Nietspitze (6, 25) zum Erzeugen eines Lochs in einem Bauteil, an dem der Schussniet angebracht werden soll, sowie mit
1.6 einer *zentralen Bohrung (16) mit einer* zentralen Angriffsstelle *(8)* für einen Verformungsvorgang, die
1.7 derart ausgebildet und angeordnet ist, dass ein Zugangriff durch einen Zugbolzen *(17)* an dieser Angriffsstelle (8) zu einer Verformung des vorderen Bereichs des Nietkörpers (1) unterhalb der Unterseite des Kragens, insbesondere mit Abstand von dieser Unterseite, führt,
**dadurch gekennzeichnet, dass**
1.8 der Nietkörper (1) *derart* ausgebildet ist, *dass* er ohne eingesetzten Zuganker eingeschossen werden *kann, und*
1.9 die zentrale Angriffsfläche *nach dem Einschießen des Nietkörpers (1)* zur zugfesten Anbringung eines Zugbolzen (17) ausgebildet ist.

2. Schussniet nach Anspruch 1, bei dem die zentrale Angriffsfläche (8) an dem Ende eines Lochs (7) oder an einer Verengung eines Lochs (7) in dem Nietkörper (1) gebildet ist.

3. Schussniet nach einem der vorhergehenden Ansprüche, bei dem die Nietspitze (6) einstückiger Teil des Nietkörpers (1) ist.

4. Schussniet nach einem der Ansprüche 1 bis 2, bei dem die Nietspitze (25) ein getrenntes mit dem Nietkörper (1) verbundenes Bauteil ist, das ggf. aus einem anderen Material oder aus einem anders vorbehandelten Material besteht als der Nietkörper (1).

5. Schussniet nach Anspruch 4, bei dem die Nietspitze (25) an ihrer dem Kragen (3) des Schussniets zugewandten Rückseite eine ebene Ringfläche zur Anlage an einer Niethülse (22) des Nietkörpers (1) und gegebenenfalls einen zentralen in die durchgehende Vertiefung der Niethülse (22) des Nietkörpers (1) eingreifenden Ansatz (27) aufweist.

6. Schussniet nach einem der vorhergehenden Ansprüche, mit einem unrunden Querschnitt des Nietkörpers (1) und/oder Vorsprüngen an der ebenen Unterseite (4) des Kragens (3).

7. Schussniet nach einem der vorhergehenden Ansprüche, bei dem der Kragen (3) einen mit einem Gewinde, insbesondere einem Außengewinde (52) versehenen Ansatz (51) aufweist, der die Angriffsfläche (5) aufweist.

8. Schussniet nach einem der vorhergehenden Ansprüche, bei dem die Bohrung (8) ein Innengewinde aufweist.

9. Verfahren zum Setzen von Schussnieten, bei dem
9.1 ein mit einer Nietspitze (6, 25) und einer Vertiefung (7) versehener Schussniet in ein Element bis zur Anlage einer Unterseite (4) seines Kragens (3) an der Oberseite (12) des Elements schlagartig eingesetzt wird,
9.2 in die Vertiefung (7) des Schussniets ein Zugbolzen (17), welchev Bestandtes/eines werlezeuges ist, bis zur Anlage insbesondere am Boden (8) des Schussniets eingeführt wird,
9.3 der Zugbolzen (17) mit dem Schussniet, insbesondere dem Boden (8) der Vertiefung (7), verbunden wird,
9.4 an dem Zugbolzen (17) nach der Anlage der Unterseite (4) des Kragens an der Oberseite des Elements zur Verformung des Niets gezogen und
9.5 der Zugbolzen (17) nach der Aufweitung des vorderen Bereichs des Nietkörpers von dem Schussniet getrennt wird.

10. Verfahren nach Anspruch 9, bei dem zur Verbindung ein Kaltschweißverfahren, eine Widerstandsverschweißung oder ein Kondensatorentladungsschweißen durchgeführt wird.

11. Verfahren nach einem der Ansprüche 9 bis 10, bei dem die Zugkraft unter Abstützung eines Gegenelements an dem Schussniet aufgebracht wird.

12. Verfahren nach Anspruch 9 oder 11, bei dem zur Verbindung des Zugbolzens mit dem Schussniet der Zugbolzen in den Boden der Vertiefung eingeschraubt und nach dem Herausziehen wieder herausgeschraubt wird.

13. Vorrichtung zum Setzen von Schussnieten, mit
13.1 einer Halterung zum Halten eines Schussniets,
13.2 einem mindestens in seinem vorderen Bereich rohrartigen Vorschubkörper (15),
13.3 einem Antrieb (31) für den schlagartigen Vorschub des Vorschubkörpers (15),
13.4 einem koaxial zu dem Vorschubkörper (15) angeordneten Zugbolzen (17), unabhängig vom Vorschubkörper (15),
13.5 einem Antrieb für den Vorschub und den Rückzug des Zugbolzens (17), unabhängig vom Vorschubkörper (15),
13.6 einer Einrichtung zum Verbinden des Zugbolzens (17) mit dem Boden einer Vertiefung (7) in dem Schussniet,
13.7 einer Einrichtung zum Lösen der Verbindung zwischen den Zugbolzen (17) und dem Schussniet.

14. Vorrichtung nach Anspruch 13, bei dem ein Magazin zur Aufnahme und Bereitstellung mehrerer Schussniete vorgesehen ist.

## Claims

1. Pop rivet, with
1.1 a rivet body (1),
1.2 a collar (3) formed thereon which
1.3 has at least one approximately level underside (4), and
1.4 on the front side (5) opposite the underside (4) a contact surface for a tool (11),
1.5 a rivet tip (6, 25) for producing a hole in a component into which the pop rivet is to be shot as well as with
1.6 a central bore (16) with a central contact point (8) for a deformation process, which
1.7 is designed and arranged in such a way that tension applied by a tensioning bolt (17) to this contact point (8) results in deformation of the front section of the rivet body (1) underneath the underside of the collar, more particularly at a distance from this underside,
**characterised in that**
1.8 the rivet body is designed so that it can be shot in without an inserted tensioning rod, and
1.9 after the application of the rivet body (1) the central contact surface is designed for the tension-resistant application of a tensioning bolt (17).

2. Pop rivet according to claim 1, in which the central contact surface (8) is formed at the end of a hole (7) or at a narrowing of a hole (7) in the rivet body (1).

3. Pop rivet according to any one of the preceding claims in which the rivet tip (6) is designed in one piece with the rivet body (1).

4. Pop rivet according to any one of claims 1 to 2, in which the rivet tip (25) is a separate component which is connected to the rivet body (1) and may consist of material that is different or has been differently pre-treated from that of the rivet body (1).

5. Pop rivet according to claim 4, in which on the rear side, facing the collar (3) of the pop rivet, the rivet tip (25) has a flat annular surface for applying to a rivet sleeve (22) of the rivet body (1) and, possibly, a projection (27) centrally engaging in the continuous recess of the rivet sleeve (22) of the rivet body (1).

6. Pop rivet according to any one of the preceding claims, with an unround cross-section of the rivet body (1) and/or projections on the level underside (4) of the collar (3).

7. Pop rivet according to any one of the preceding claims, in which the collar (3) has a projection (51), provided with an external thread (52), that has the contact surface (5).

8. Pop rivet according to any one of the preceding claims, in which the bore (8) has an internal thread.

9. Method of setting pop rivets, in which
9.1 a pop rivet with a rivet tip (6, 25) and a recess (7) is abruptly introduced into an element until the underside (4) of its collar (3) comes into contact with the upper side (12) of the element,
9.2 into the recess (7) of the pop rivet a tensioning bolt (17), which forms part of a tool, is introduced until it comes into contact, in particular, with the base (8) of the pop rivet,
9.3 the tensioning bolt (17) is connected to the pop rivet, more particularly the base (8) of the recess (7),
9.4 after contacting of the underside (4) of the collar on the upper side of the element, the tensioning bolt (17) is pulled to deform the rivet and
9.5 the tensioning bolt (17) is separated from the rivet after expansion of the forward section of the rivet body.

10. Method according to claim 9, in which for the connection a cold welding process, electrical resistance welding or capacitor discharge welding is carried out.

11. Method according to any one of claims 9 to 10, in which the tensioning force is applied supported on a counter-element on the pop rivet.

12. Method according to claim 9 or 11, in which to connect the tensioning bolt to the pop rivet, the tensioning blot is screwed into the base of the recess and unscrewed again after pulling out.

13. Device for setting pop rivets, with
13.1 a holder for holding a pop rivet,
13.2 a thrust body (15) which is tubular at least in its front section,
13.3 an actuator (31) for the abrupt advancing of the thrust body (15),
13.4 a tensioning bolt (17), independent of the thrust body (15), arranged coaxially to the thrust body (15),
13.5 an actuator for advancing and retracting the tensioning bolt (17) independently of the thrust body (15),
13.6 a device for connecting the tensioning bolt (17) with the base of a recess (7) in the pop rivet,
13.7 a device for loosening the connection between the tensioning bolt (17) and the pop rivet.

14. Device according to claim 13, in which a magazine for holding and providing several pop rivets is envisaged.

## Revendications

1. Rivet à frapper, comprenant
1.1 un corps de rivet (1),
1.2 une collerette (3) formée sur celui-ci, qui
1.3 présente une face inférieure (4) au moins quasi plane et
1.4 une surface d'attaque pour un outil (11) sur la face avant (5) opposée à la face inférieure (4),
1.5 une pointe de rivet (6, 25) pour produire un trou dans une pièce sur laquelle le rivet à frapper doit être appliqué, ainsi
1.6 qu'un perçage central (16) avec un point d'attaque central (8) pour une opération de déformation, qui
1.7 est ainsi formé et disposé qu'une attaque par traction par un boulon d'assemblage (17) sur ce point d'attaque (8) conduit à une déformation de la partie avant du corps de rivet (1) en-dessous de la face inférieure de la collerette, en particulier à distance de cette face inférieure,
**caractérisé en ce que**
1.8 le corps de rivet (1) est ainsi formé qu'il peut être inséré sans tirant d'ancrage inséré, et
1.9 la face d'attaque centrale est formée après que le corps de rivet (1) a été inséré pour fixer un boulon d'assemblage (17) en résistance à la traction.

2. Rivet à frapper selon la revendication 1, dans lequel la face d'attaque centrale (8) est formée à l'extrémité d'un trou (7) ou sur un rétrécissement d'un trou (7) dans le corps de rivet (1).

3. Rivet à frapper selon la revendication 1 ou 2, dans lequel la pointe de rivet (6) est une pièce d'un seul tenant du corps de rivet (1).

4. Rivet à frapper selon l'une des revendications 1 ou 2, dans lequel la pointe de rivet (25) est une pièce séparée reliée au corps de rivet (1) qui, éventuellement, est fabriquée dans un autre matériau ou dans un matériau prétraité autrement que le corps de rivet (1).

5. Rivet à frapper selon la revendication 4, dans lequel la pointe de rivet (25) présente, sur sa face arrière tournée vers la collerette (3) du rivet à frapper, une face annulaire plane pour s'appuyer sur une douille de rivet (22) du corps de rivet (1) et le cas échéant, un épaulement (27) central se mettant en prise dans le creux traversant de la douille de rivet (22) du corps de rivet (1).

6. Rivet à frapper selon l'une des revendications précédentes, avec une section non ronde du corps de rivet (1) et/ou des saillies sur la face inférieure plane (4) de la collerette (3).

7. Rivet à frapper selon l'une des revendications précédentes, dans lequel la collerette (3) présente un épaulement (51) doté d'un filetage, en particulier d'un filet mâle (52), qui présente la face d'attaque (5).

8. Rivet à frapper selon l'une des revendications précédentes, dans lequel le perçage (8) présente un filet femelle.

9. Procédé de pose de rivets à frapper, dans lequel
9.1 un rivet à frapper doté d'une pointe de rivet (6, 25) et d'un creux (7) est inséré par martelage dans un élément jusqu'à ce qu'une face inférieure (4) de sa collerette (3) vienne s'appuyer sur la face supérieure (12) de l'élément,
9.2 un boulon d'assemblage (17) faisant partie d'un outil est introduit dans le creux (7) du rivet à frapper jusqu'à s'appuyer, en particulier sur le fond (8) du rivet à frapper,
9.3 le boulon d'assemblage (17) est relié au rivet à frapper, en particulier au fond (8) du creux (7),
9.4 tiré sur le boulon d'assemblage (17) après l'appui de la face inférieure (4) de la collerette sur la face supérieure de l'élément pour déformer le boulon, et
9.5 le boulon d'assemblage (17) est séparé du rivet à frapper après l'élargissement de la partie avant du corps de rivet.

10. Procédé selon la revendication 9, dans lequel un procédé de soudage à froid, un soudage à résistance ou un soudage à décharge de condensateur est effectué pour la liaison.

11. Procédé selon l'une des revendications 9 à 10, dans lequel la force de traction est appliquée en appuyant un contre-élément sur le rivet à frapper.

12. Procédé selon la revendication 9 ou 11, dans lequel le boulon d'assemblage est vissé dans le fond du creux pour relier le boulon d'assemblage au rivet à frapper, puis est de nouveau dévissé après avoir été sorti.

13. Dispositif de pose de rivets à frapper, comprenant
13.1 une fixation pour tenir un rivet à frapper,
13.2 un corps d'avancement (15) tubulaire au moins dans sa partie avant,
13.3 un entraînement (31) pour l'avancée par martelage du corps d'avancement (15),
13.4 un boulon d'assemblage (17) disposé coaxialement au corps d'avancement (15), indépendamment du corps d'avancement (15),
13.5 un entraînement pour l'avancement et le retour du boulon d'assemblage (17), indépendamment du corps d'avancement (15),
13.6 un dispositif pour relier le boulon d'assemblage (17) au fond d'un creux (7) dans le rivet à frapper,
13.7 un dispositif pour défaire la liaison entre le boulon d'assemblage (17) et le rivet à frapper.

14. Dispositif selon la revendication 13, dans lequel un magasin est prévu pour recevoir et préparer plusieurs rivets à frapper.
